# NEUE EUROPÄISCHE PATENTSCHRIFT

(11) **EP 0 965 505 B2**
(45) Veröffentlichungstag und Bekanntmachung des Hinweises auf die Entscheidung über den Einspruch: **29.07.2009**
(45) Hinweis auf die Patenterteilung: 19.07.2006
(21) Anmeldenummer: 99109404.6
(22) Anmeldetag: 11.05.1999
(51) Int. Cl.: B60S 3/04

(54) **Trocknungsverfahren und Fahrzeugwaschanlage mit Trockeneinrichtung**
Drying method and car wash with dryer
Méthode de séchage et installation de lavage de voitures avec dispositif de séchage

(30) Priorität: 17.06.1998 DE 29810804 U
(43) Veröffentlichungstag der Anmeldung: 22.12.1999
(73) Patentinhaber: WashTec Holding GmbH, 86153 Augsburg (DE)
(72) Erfinder: Windel, Günter, 63825 Schöllkrippen/Schneppenbach (DE)
(74) Vertreter: Rapp, Bertram

(56) Entgegenhaltungen:
- EP-A- 0 879 744
- DE-A- 3 204 757
- DE-A- 19 510 397
- DE-A1- 2 334 840
- DE-A1- 2 834 582
- DE-A1- 3 128 965
- DE-A1- 19 510 397
- US-A- 4 651 442
- US-A- 4 991 316

## Beschreibung

Die Erfindung betrifft ein Trocknungsverfahren und eine Waschanlage für Fahrzeuge mit einer Trockeneinrichtung. Ein Verfahren und eine Waschanlage sind aus der US 4991316A bekannt.

Fahrzeugwaschanlagen mit einer Trocknungseinrichtung sind aus der Praxis bekannt. Die Trockeneinrichtung umfaßt eine Dachdüse und mehrere Seitendüsen. Von der Dachdüse wird die Trockenluft senkrecht nach unten geblasen. Die separat angeordneten Seitendüsen richten eine im wesentlichen horizontale Luftströmung gegen die Seitenflächen des Fahrzeugs. Die vorbekannte Trockeneinrichtung ist bauaufwendig und bedarf für die Seitendüsen auch einer besonderen Luftversorgung mit eigenen Gebläsen.

Es ist Aufgabe der vorliegenden Erfindung, ein besseres Trocknungsverfahren und eine Waschanlage mit einer besseren Trockeneinrichtung aufzuzeigen.

Die Erfindung löst diese Aufgabe mit den Merkmalen der Ansprüche 1 und 2.
Bei der Erfindung richtet die Dachdüse an ihren Enden von oben einen verstärkten Seitenstrahl gegen die Seitenfläche des Fahrzeugs. Dadurch beaufschlagt die Dachdüse nicht nur die oberen Fahrzeugpartien, sondern auch die seitlichen Fahrzeugflächen. Der Trockeneffekt ist gegenüber den vorbekannten Konstruktionen wesentlich verbessert. Insbesondere erlaubt diese Ausgestaltung der Dachdüse auch einen Verzicht auf zusätzliche Seitendüsen. Damit läßt sich der Bauaufwand der Trockeneinrichtung wesentlich verringern.

Der vorzugsweise schräg von oben auf die Seitenflächen des Fahrzeugs auftreffende Seitenstrahl der Dachdüse treibt das Wasser an den Fahrzeugseitenflächen nach unten und erzielt dadurch eine besonders gute Trocknung. Die schrägen Seitenstrahlen haben außerdem eine große Auftrefffläche. Der gegenüber dem mittleren Strömungsbereich verstärkte und mit einer höheren Strömungsgeschwindigkeit ausgestattete Seitenstrahl reicht weit genug nach unten, um auch die unteren Fahrzeugpartien zu erreichen und zu trocknen.

Zur Erzielung dieser Strahlführung ist die Dachdüse abgewinkelt und besitzt vorzugsweise an den Enden des schlitzförmigen Düsenauslasses eine Erweiterung. Durch diese Erweiterung, die vorzugsweise konisch ausgebildet ist, erhält der Seitenstrahl die gewünschte Stärke und Stabilität. Dieser Effekt kann vorteilhaft unterstützt werden durch eine randseitige Anordnung der Gebläse im Düsengehäuse, wodurch an den unmittelbar benachbarten Erweiterungen des Düsenauslasses der maximale Förderdruck ansteht. Die Luftführung wird zusätzlich durch innenliegende Leitwände günstig beeinflußt, die das von den randseitigen Gebläsen zur Düsenmitte entstehende Druckgefälle gegenkompensieren und für zusätzlichen Staudruck für die Seitenstrahlen sorgen.

Zur Vereinfachung und Verringerung des Bauaufwandes ist das Dachdüsengehäuse vorzugsweise zweiteilig ausgebildet und besteht einem Düsenkasten mit den Gebläsen und der Luftführung sowie einen an dessen Unterseite angeordneten Düsenmund, der für die Strahlführung sorgt.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Waschanlage mit einer Trockeneinrichtung in Stirnansicht,
- Figur 2:: eine vergrößerte Stirnansicht der Dachdüse,
- Figur 3:: eine Ansicht des Düsenmundes von unten,
- Figur 4:: eine geklappte Frontansicht des Düsenmundes von Figur 3 und
- Figur 5:: eine Seitenansicht des Düsenmundes gemäß Pfeil V von Figur 4.

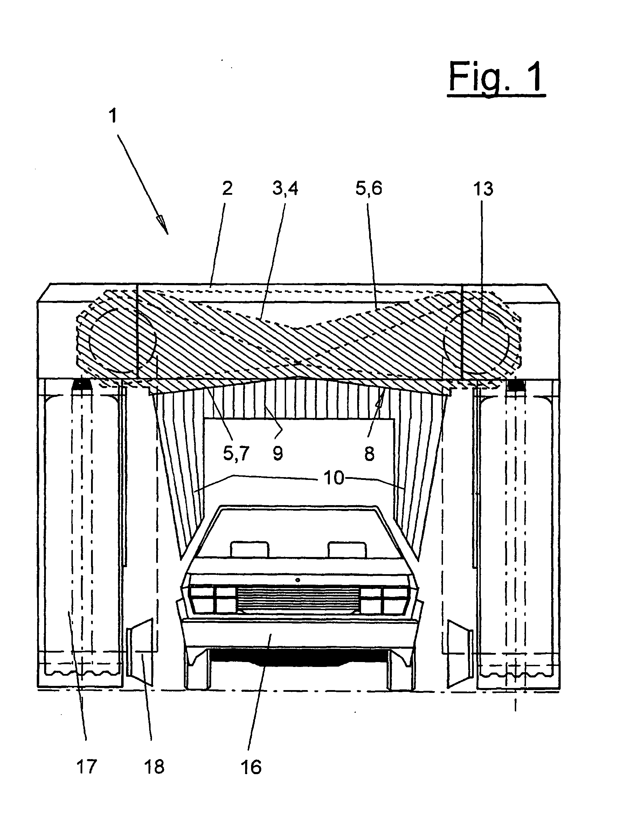

Figur 1 zeigt in Stirnansicht eine Fahrzeugwaschanlage, die im gezeigten Ausführungsbeispiel als Portalwaschanlage ausgebildet ist. Das Portal (2) bewegt sich gegenüber dem stehenden Fahrzeug (16). Alternativ kann die Waschanlage (1) auch in beliebig anderer Weise ausgebildet sein, z.B. als Autowaschstraße, Taktanlage, Doppelportalanlage oder dergleichen.

In der gezeigten Ausführungsform sind in dem Portal (2) die Wascheinrichtung und die Trockeneinrichtung (3) untergebracht. Von der Wascheinrichtung sind der Übersicht halber lediglich die Seitenbürsten (17) und die Radwaschbürsten (18) dargestellt. Die Auftragevorrichtungen für Reinigungsmittel, Spülwasser etc. sind der Übersicht halber nicht dargestellt. Gleiches gilt auch für eine eventuell vorhandene Hochdruck-Wascheinrichtung.

Die Trockeneinrichtung (3) umfaßt eine im wesentlichen horizontale Dachdüse (4). In der bevorzugten Ausführungsform wird auf zusätzliche Seitendüsen verzichtet. In einer abgewandelten Ausführungsform kann die Trockeneinrichtung (3) aber auch mit zwei oder mehr solchen Seitendüsen ausgestattet sein.

Die Dachdüse (4) erzeugt im mittleren Bereich eine im wesentlichen vertikal gerichtete Luftströmung (9) und an ihren beiden Enden einen Seitenstrahl (10) der Trockenluft. Der Seitenstrahl (10) ist gegenüber der Luftströmung (9) verstärkt und ist auch jeweils auf die benachbarte Seitenfläche des Fahrzeugs (16) gerichtet. Die Seitenstrahlen (10) besitzen eine höhere Strömungsgeschwindigkeit und eine größere und stabilere Strahllänge als die Luftströmung (9) im Mittelbereich. In der erfindunggemäßen Ausführungsform sind die Seitenstrahlen (10) von außen kommend schräg nach unten gegen die Fahrzeugseitenflächen gerichtet. Sie haben dadurch eine horizontale Strahlkomponente.

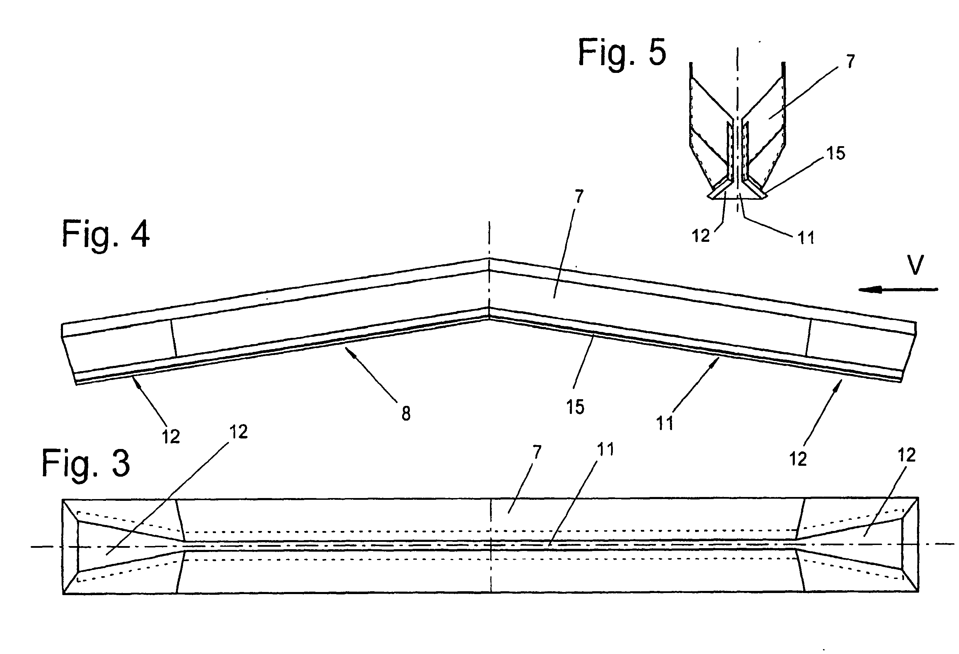

Wie Figur 3 bis 5 verdeutlichen, hat die Dachdüse (4) an der Unterseite einen im wesentlichen schlitzförmigen Düsenauslaß (11) mit jeweils einer Erweiterung (12) an den Schlitzenden. Der Düsenschlitz (11) hat vorzugsweise parallele Wände und damit eine gleichbleibende Schlitzweite. Die Erweiterungen (12) sind vorzugsweise konisch oder trichterförmig ausgebildet. Die Erweiterungen (12) ergeben einen nach außen zunehmenden Strömungsquerschnitt für den jeweiligen Seitenstahl (10). Dieser erhält durch diese Formgebung eine entsprechend nach außen zunehmende Strahlstärke, Strahllänge und Stabilität.

Wie Figur 1, 2 und 4 verdeutlichen, hat die Dachdüse (4) an der Unterseite eine zu ihren Enden schräg abwärts gebogene oder abgewinkelte Form (8). In der bevorzugten Ausführungsform ergibt sich eine dachartige mittensymmetrische Winkelform. Durch diese Winkelform (8) erhalten die Luftströmung (9) und vor allem die Seitenstrahlen (10) eine jeweils schräg auf das Fahrzeug (16) gerichtete Strahlform und eine horizontale Strahlkomponente. Dadurch treffen insbesondere die Seitenstrahlen (10) in der in Figur 1 schematisch dargestellten Weise schräg von außen und von oben auf die Fahrzeugseitenflächen.

Die Dachdüse (4) besitzt ein Gehäuse (5), an dessen beiden Enden jeweils mindestens ein Gebläse (13) angeordnet ist. Die Gebläse (13) sind dadurch in unmittelbarer Nähe zu den Erweiterungen (12) angeordnet. Der Förderdruck ist dadurch an den Erweiterungen (12) zusätzlich gegenüber dem Mittenbereich der Dachdüse (4) erhöht. Die Gebläse (13) können in beliebig geeigneter Weise ausgebildet sein.

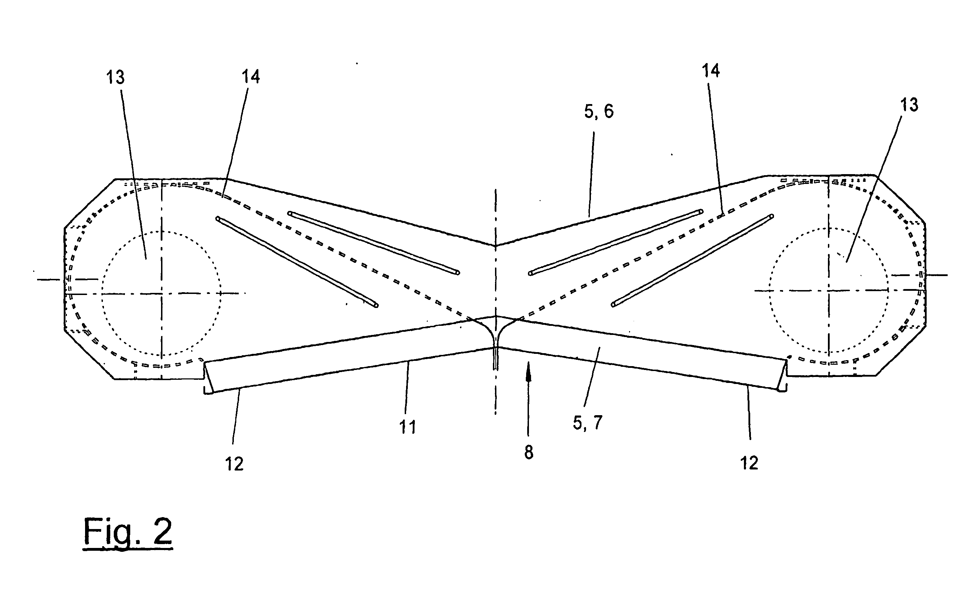

Wie Figur 1 und 2 verdeutlichen, können im Inneren des kastenförmigen Gehäuses (5) an dessen Oberseite Leitwände (14) vorhanden sein. Diese sind von den randseitigen Gebläsen (13) ausgehend zum Mittenbereich der Dachdüse (4) hin schräg nach unten gerichtet. Durch die seitlichen Gehäusewände und die Leitwände (14) werden beidseitig Düsen gebildet, durch die das Druckgefälle zum Mittenbereich hin gegenkompensiert wird. Die Leitwände (14) können zum Beispiel in der in Figur 2 gezeigten Weise als Spiralbleche ausgebildet und um die Gebläse (13) herumgezogen sein.

Das Gehäuse (5) ist in der bevorzugten Ausführungsform mehrteilig ausgebildet und besteht aus einem oberen Düsenkasten (6) und einem darunter auslaßseitig angeordneten Düsenmund (7). Der Düsenkasten (6) nimmt die Gebläse (13) und die Leitwände (14) auf. Er ist im Bereich zwischen den Gebläsen (13) nach unten offen und kann mit seinen unteren Rändern die besagte Winkelform (8) aufweisen. Wie Figur 2 verdeutlicht, können im Mittelbereich die Leitwände (14) ein Stück nach unten über die Ränder des Düsenkastens (6) vorstehen und an der Stoßstelle eine geschwungene Spitze bilden.

Der in Figur 3 bis 5 näher dargestellte Düsenmund (7) besitzt die Form eines in der Frontansicht abgewinkelten und im Querschnitt im wesentlichen u-förmigen Gehäuses. An der Oberseite hat der Düsenmund (7) eine dem Auslaß des Düsenkastens (6) entsprechende Öffnungsweite und ist an der Kastenunterseite in geeigneter Weise befestigt, z.B. durch Schrauben, Schnellverschlüsse und dergleichen. Zur Unterseite hin verjüngt sich der Düsenmund (7) im Querschnitt und bildet an der Unterseite den vorerwähnten Düsenauslaß (11) mit den endseitigen Erweiterungen (12). An den Stirnseiten kann der Düsenmund (7) durch nach unten abstehende Deckbleche des Düsenkastens (6) verschlossen sein. An der Unterseite kann der Düsenmund (7) ferner beidseits des Düsenauslasses (11) und der Erweiterungen (12) seitlich abstehende Winkelleisten (15) aufweisen. Durch diese Winkelleisten (15) wird in Verbindung mit der Winkelform (8) Spritz- oder Tropfwasser zur Seite hin abgeleitet.

Die Dachdüse (4) kann stationär im Portal (2) befestigt sein. Sie kann alternativ höhenbeweglich angeordnet und über einen Antrieb auf und ab bewegt werden. Dabei kann die Dachdüsenbewegung entsprechend der Höhenkontur des Fahrzeugs (16) gesteuert werden, so daß der Düsenmund (7) mit einem optimierten und im wesentlichen gleichbleibenden Abstand über die oberen Fahrzeugpartien (Motorhaube, Windschutzscheibe, Dach, Heckscheibe und Kofferraum) geführt wird. Die Konturenabtastung kann in beliebig geeigneter Weise erfolgen. Dies ist beispielsweise über mitgeführte Lichtschranken und eine Online-Steuerung möglich. Desgleichen kann die Fahrzeugkontur auch vorher stationär oder über die Dachbürste, eine Hochdruck-Dachdüse oder auf andere geeignete Weise abgetastet werden. Die Dachdüse (4) der Trockeneinrichtung (3) kann außerdem mit einer Dachdüse einer Hochdruck-Wascheinrichtung oder einem Sprührohr für Chemikalienauftrag, Spülwasser, Osmosewasser oder dergleichen kombiniert sein (nicht dargestellt).

Abwandlungen des beschriebenen Ausführungsbeispiels sind in verschiedener Weise möglich. Zum einen kann die Form der Erweiterungen (12) und des Düsenauslasses (11) variieren. Variabel ist auch die Gestaltung des Gehäuses (5) und die Anordnung und Ausbildung der Gebläse (13).

### BEZUGSZEICHENLISTE

- 1: Waschanlage
- 2: Portal
- 3: Trockeneinrichtung
- 4: Dachdüse
- 5: Gehäuse
- 6: Düsenkasten
- 7: Düsenmund
- 8: Winkelform
- 9: Luftströmung
- 10: Seitenstrahl
- 11: Düsenauslaß, Düsenschlitz
- 12: Erweiterung
- 13: Gebläse
- 14: Leitwand, Spiralblech
- 15: Winkelleiste
- 16: Fahrzeug
- 17: Seitenbürste
- 18: Radwaschbürste

## Patentansprüche

1. Verfahren zum Trocknen von Fahrzeugen (16) in einer Waschanlage (1) mittels einer Trockeneinrichtung (3) und einer Dachdüse (4), wobei von der Dachdüse (4) an deren Enden ein Seitenstrahl (10) schräg von oben auf die Seitenflächen des Fahrzeugs gerichtet wird, wobei der Seitenstrahl (10) gegenüber dem mittleren Strömungsbereich verstärkt ist und eine höhere Strömungsgeschwindigkeit als die Luftströmung (9) im Mittelbereich besitzt und weit genug nach unten reicht um auch die unteren Fahrzeugpartien zu erreichen und zu trocknen.

2. Waschanlage für Fahrzeuge mit einer Trockeneinrichtung (3) und einer Dachdüse (4), wobei die Dachdüse (4) an den Enden einen Seitenstrahl (10) erzeugt, der schräg von oben auf die Seitenflächen des Fahrzeugs (16) gerichtet ist, wobei der Seitenstrahl gegenüber dem mittleren Strömungsbereich verstärkt ist und dass die Dachdüse (4) eine zu den Enden schräg abwärts gebogene oder abgewinkelte Form aufweist.

3. Waschanlage nach Anspruch 2, **dadurch gekennzeichnet, daß** der Seitenstrahl (10) schräg auf die Seitenflächen des Fahrzeugs (16) gerichtet ist.

4. Waschanlage nach Anspruch 2 oder 3, **dadurch gekennzeichnet, daß** die Trockeneinrichtung (3) nur eine Dachdüse (4) ohne Seitendüsen aufweist.

5. Waschanlage nach Anspruch 2, 3 oder 4, **dadurch gekennzeichnet, daß** die Dachdüse (4) einen im wesentlichen schlitzförmigen Düsenauslaß (11) mit einer Erweiterung (12) an den Enden aufweist.

6. Waschanlage nach Anspruch 5, **dadurch gekennzeichnet, daß** die Erweiterung (12) konisch ausgebildet ist.

7. Waschanlage nach einem der Ansprüche 2 bis 6, **dadurch gekennzeichnet, daß** die Dachdüse (4) ein Gehäuse (5) aufweist, an dessen Enden Gebläse (13) angeordnet sind.

8. Waschanlage nach einem der Ansprüche 2 bis 7, **dadurch gekennzeichnet, daß** das Gehäuse (5) an der Oberseite Leitwände (14) aufweist, die zum Mittenbereich schräg abwärts gerichtet sind.

9. Waschanlage nach einem der Ansprüche 2 bis 8, **dadurch gekennzeichnet, daß** das Gehäuse (5) mehrteilig ausgebildet ist und einen oberen Düsenkasten (6) und einen darunter befestigten Düsenmund (7) aufweist.

10. Waschanlage nach einem der Ansprüche 2 bis 9, **dadurch gekennzeichnet, daß** das Gehäuse (5) am Düsenauslaß (11) längslaufende Winkelleisten (15) aufweist.

## Revendications

1. Procédé de séchage de véhicules (16) dans une installation de lavage (1) au moyen d'un dispositif de séchage (3) et d'une buse de toit (4), dans lequel depuis la buse de toit (4) au niveau de ses extrémités, un jet latéral (10) est orienté de façon oblique du dessus en direction des surfaces latérales du véhicule, le jet latéral (10) étant renforcé par rapport à la zone d'écoulement centrale et possédant une vitesse d'écoulement supérieure à l'écoulement d'air (9) dans la zone centrale et parvenant suffisamment loin vers le bas pour atteindre et sécher également les parties inférieures du véhicule.

2. Installation de lavage de véhicules dotée d'un dispositif de séchage (3) et d'une buse de toit (4), dans laquelle la buse de toit (4) produit au niveau des extrémités un jet latéral (10) qui est orienté de façon oblique du dessus en direction des surfaces latérales du véhicule (16), le jet latéral étant renforcé par rapport à la zone d'écoulement centrale et la buse de toit (4) comprenant alors une forme (8) fléchie ou coudée de façon oblique vers le bas en direction des extrémités.

3. Installation de lavage selon la revendication 2, **caractérisée en ce que** le jet latéral (10) est orienté de façon oblique sur les surfaces latérales du véhicule (16) ;

4. Installation de lavage selon la revendication 2 ou 3, **caractérisée en ce que** le dispositif de séchage (3) ne comprend qu'une buse de toit (4) sans buses latérales.

5. Installation de lavage selon la revendication 2, 3 ou 4, **caractérisée en ce que** la buse de toit (4) comprend un orifice d'évacuation de buse (11) sensiblement en forme de fente doté d'un élargissement (12) au niveau des extrémités.

6. Installation de lavage selon la revendication 5, **caractérisée en ce que** l'élargissement (12) est conçu de façon conique.

7. Installation de lavage selon l'une quelconque des revendications 2 à 6, **caractérisée en ce que** la buse de toit (4) comprend un boîtier (5) aux extrémités duquel sont disposés des ventilateurs (13).

8. Installation de lavage selon l'une quelconque des revendications 2 à 7, **caractérisée en ce que** le boîtier (10) comprend sur la face supérieure des parois de guidage (14) qui sont orientées de façon oblique et vers le bas par rapport à la zone centrale.

9. Installation de lavage selon l'une quelconque des revendications 2 à 8, **caractérisée en ce que** le boîtier (5) est conçu en plusieurs parties et comprend une caisse de buse supérieure (6) et une embouchure de buse (7) fixée dessous.

10. Installation de lavage selon l'une quelconque des revendications 2 à 9, **caractérisée en ce que** le boîtier (5) comprend des baguettes angulaires (15) s'étendant longitudinalement sur l'orifice d'évacuation de buse (11).

## Claims

1. Method for drying vehicles (16) in a washing system (1) by means of a drying device (3) and a roof nozzle (4), wherein a side jet (10) is directed obliquely from above onto the side faces of the vehicle from the roof nozzle (4), at the ends thereof, wherein the side jet (10) is boosted compared to the central flow region and has a higher flow speed than the air flow (9) in the centre region and reaches far enough down in order to also reach the lower vehicle portions and dry them.

2. Washing system for vehicles with a drying device (3) and a roof nozzle (4), wherein the roof nozzle (4), at the ends, generates a side jet (10), which is directed obliquely from above onto the side faces of the vehicle (16), wherein the side jet is boosted compared to the central flow region and in that the roof nozzle (4) has a shape which is curved or angled obliquely downwardly to the ends.

3. Washing system according to claim 2, **characterised in that** the side jet (10) is directed obliquely onto the side faces of the vehicle (16).

4. Washing system according to claim 2 or 3, **characterised in that** the drying device (3) only has one roof nozzle (4) without side nozzles.

5. Washing system according to claim 2, 3 or 4, **characterised in that** the roof nozzle (4) has a substantially slot-shaped nozzle outlet (11) with an expansion (12) at the ends.

6. Washing system according to claim 5, **characterised in that** the expansion (12) is conical.

7. Washing system according to any one of claims 2 to 6, **characterised in that** the roof nozzle (4) has a housing (5), at the ends of which fans (13) are arranged.

8. Washing system according to any one of claims 2 to 7, **characterised in that** the housing (5) has, at the upper side, guide walls (14), which are directed obliquely downwardly to the central region.

9. Washing system according to any one of claims 2 to 8, **characterised in that** the housing (5) is configured with multiple parts and has an upper nozzle case (6) and a nozzle mouth (7) fastened below it.

10. Washing system according to any one of claims 2 to 9, **characterised in that** the housing (5) has longitudinally extending angle strips (15) on the nozzle outlet (11).
